(19) Europäisches Patentamt
European Patent Office
Office européen des brevets

(11) EP 2 512 244 B1

# (12) EUROPEAN PATENT SPECIFICATION

(45) Date of publication and mention of the grant of the patent:
**25.06.2014 Bulletin 2014/26**

(21) Application number: **10787792.0**

(22) Date of filing: **10.12.2010**

(51) Int Cl.:
***A01N 43/54*** *(2006.01)* ***A01N 43/56*** *(2006.01)*
***A01N 43/653*** *(2006.01)* ***A01N 3/00*** *(2006.01)*

(86) International application number:
**PCT/EP2010/069389**

(87) International publication number:
**WO 2011/073103 (23.06.2011 Gazette 2011/25)**

(54) **ACTIVE COMPOUND COMBINATIONS COMPRISING PROQUINAZID, BIXAFEN AND OPTIONALLY PROTHIOCONAZOLE**

AKTIVE VERBINDUNGSKOMBINATIONEN MIT PROQUINAZID, BIXAFEN UND OPTIONAL PROTHIOCONAZOL

COMBINAISONS DE COMPOSÉS ACTIFS COMPRENANT DU PROQUINAZIDE, DU BIXAFEN ET FACULTATIVEMENT DU PROTHIOCONAZOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2009 EP 09179423**
**17.12.2009 US 287478 P**
**18.03.2010 EP 10156828**

(43) Date of publication of application:
**24.10.2012 Bulletin 2012/43**

(73) Proprietor: **Bayer CropScience AG**
**40789 Monheim (DE)**

(72) Inventors:
- **KRIEG, Ulrich**
  **51381 Leverkusen (DE)**
- **DAHMEN, Peter**
  **41470 Neuss (DE)**
- **STEINBECK, Martin**
  **50931 Köln (DE)**

(74) Representative: **BIP Patents**
**c/o Bayer Intellectual Property GmbH**
**Creative Campus Monheim**
**Alfred-Nobel-Straße 10**
**40789 Monheim (DE)**

(56) References cited:
**EP-A1- 2 071 953** **WO-A1-98/33381**
**WO-A1-2005/034628**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 512 244 B1

## Description

The invention relates to fungicidally active compound combinations, in particular within a fungicide composition, which comprises (A) proquinazid and (B) bixafen and optjonal compound (C) prothioconazole. Moreover, the invention relates to a method for curatively or preventively controlling the phytopathogenic fungi of plants or crops, to the use of a combination according to the invention for the treatment of seed, to a method for protecting a seed and not at least to the treated seed.

Proquinazid, having the chemical name 6-iodo-2-propoxy-3-propyl-4(3H)-quinazolinone (Compound A) and its manufacturing process starting from known and commercially available compounds is described in WO 94/26722. Proquinazid is commercially available under the trade designation Talius®.

Bixafen, having the chemical name N-(3',4'-dichloro-5-fluoro-1,1'-biphenyl-2-yl)-3-(difluoro-methyl)-1-methyl-1H-pyrazole-4-carbaxamide (Compound B) and its manufacturing process starting from known and commercially available compounds is described in WO 03/070705.

Prothioconazole, having the chemical name 2-[2-(1-chlorocyclopropyl)-3(2 chlorophenyl)-2-hydroxypropyl]-1,2-dihydro-3H-1,2,4-triazole-3-thione (Compound C) and its manufacturing process starting from known and commercially available compounds is described in WO 96/16048.

Active compound combinations comprising bixafen and further fungicides are disclosed in WO 2005/034628 and WO 2007/110173. Active compound combinations comprising prothioconazole and further fungicides are disclosed in WO 98/47367, WO 03/073850, WO 03/073851, and WO 03/073852. Active compound combinations comprising proquinazid and further fungicides are disclosed in WO 98/33381. EP 2071953 A1 discloses the use of the succinate dehydrogenase inhibitor bixafen in combination with known fungicides, including prothioconazole. Proquinazid is not disclosed. However, neither of the prior art references teaches to combine proquinazid and bixafen and optionally prothioconazole.

Since the environmental and economic requirements imposed on modern-day fungicides are continually increasing, with regard, for example, to the spectrum of action, toxicity, selectivity, application rate, formation of residues, and favorable preparation ability, and since, furthermore, there may be problems, for example, with resistances, a constant task is to develop new fungicide agents which in some areas at least have advantages over their known counterparts.

The invention provides active compound combinations/compositions which in some aspects at least achieve the stated objectives.

It has now been found, surprisingly, that the combinations/compositions according to the invention not only bring about the additive enhancement of the spectrum of action with respect to the phytopathogens to be controlled that was in principle to be expected but achieves a synergistic effect which extends the range of action of the component (A) and of the component (B) and of the optional component (C) in two ways. Firstly, the rates of application of the component (A) and of the component (B) and of the optional component (C) are lowered whilst the action remains equally good. Secondly, the combination still achieves a high degree of phytopathogen control even where the two individual compounds have become totally ineffective in such a low application rate range. This allows, on the one hand, a substantial broadening of the spectrum of phytopathogens that can be controlled and, on the other hand, increased safety in use.

However, besides the actual synergistic action with respect to fungicidal activity, the pesticidal combinations according to the invention also have further surprising advantageous properties which can also be described, in a wider sense, as synergistic activity. Examples of such advantageous properties that may be mentioned are: a broadening of the spectrum of fungicidal activity to other phytopathogens, for example to resistant strains; a reduction in the rate of application of the active ingredients; adequate pest control with the aid of the compositions according to the invention, even at a rate of application at which the individual compounds are totally ineffective; advantageous behavior during formulation or upon application, for example upon grinding, sieving, emulsifying, dissolving or dispensing; increased storage stability; improved stability to light; more advantageous degradability; improved toxicological or ecotoxicological behavior; improved characteristics of the useful plants including: emergence, crop yields, more developed root system, tillering increase, increase in plant height, bigger leaf biade, less dead basal leaves, stronger tillers, greener leaf color, less fertilizers needed, less seeds needed, more productive tillers, earlier flowering, early grain maturity, less plant verse (lodging), increased shoot growth, improved plant vigor, and early germination; or any other advantages familiar to a person skilled in the art.

The combination according to the invention can also provide an improved systemicity to the active compounds that are used. Indeed, even if some of the used fungicide compounds do not possess any or a satisfying systemicity, within the composition according to the invention these compounds can exhibit such a property.

Furthermore, the active compound combination according to the present invention facilitates excellent powdery mildew control.

In a similar manner, the combination according to the invention can allow an increased persistence of the fungicide efficacy of the active compounds that are employed.

Another advantage of the combination according to the invention relies in that an increased curativity is achievable.

Accordingly, the present invention provides an active compound combination comprising:

(A) proquinazid and

(B) bixafen and as optional compound

(C) prothioconazole.

In particular this invention provides an active compound combination comprising (A) proquinazid and (B) bixafen.

In particular this invention provides an active compound combination comprising (A) proquinazid and (B) bixafen and (C) prothioconazole.

In particular this invention provides an active compound combination consisting of (A) proquinazid and (B) bixafen and suitable adjuvants, solvents, carrier, surfactants or extenders.

In particular this invention provides an active compound combination consisting of (A) proquinazid and (B) bixafen and (C) prothioconazole and suitable adjuvants, solvents, carrier, surfactants or extenders.

In the combinations according to the invention the compounds (A) and (B) or the compounds (A) and (C) or the compounds (B) and (C) are present in a synergistically effective weight ratio of A:B or A:C or B:C in a range of 100:1 to 1:100, preferably in a weight ratio of 50:1 to 1:50, most preferably in a weight ratio of 20:1 to 1:20. Further ratios of A:B or A:C or A:B:C which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2.

Where a compound (A) or a compound (B) or a compound (C) can be present in tautomeric form, such a compound is understood hereinabove and hereinbelow also to include, where applicable, corresponding tautomeric forms, even when these are not specifically mentioned in each case.

Compounds (A) or compounds (B) or compounds (C) having at least one basic centre are capable of forming, for example, acid addition salts, e.g. with strong inorganic acids, such as mineral acids, e.g. perchloric acid, sulfuric acid, nitric acid, nitrous acid, a phosphoric acid or a hydrohalic acid, with strong organic carboxylic acids, such as unsubstituted substituted, e.g. halo-substituted, $C_1$-$C_4$ alkanecarboxylic acids, e.g. acetic acid, saturated or unsaturated dicarboxylic acids, e.g. oxalic, malonic, succinic, maleic, fumaric and phthalic acid, hydroxycarboxylic acids, e.g. ascorbic, lactic, malic, tartaric and citric acid, or benzoic acid, or with organic sulfonic acids, such as unsubstituted or substituted, e.g. halo-substituted, $C_1$-$C_4$alkane- or aryl-sulfonic acids, e.g. methane- or p-toluene-sulfonic acid. Compounds (A) or compounds (B) or compounds (C) having at least one acid group are capable of fonning, for example, salts with bases, e.g. metal salts, such as alkali metal or alkaline earth metal salts, e.g. sodium, potassium or magnesium salts, or salts with ammonia or an organic amine, such as morpholine, piperidine, pyrrolidine, a mono-, di- or tri-lower alkylamine, e.g. ethyl-, diethyl-, triethyl- or dimethylpropyl-amine, or a mono-, di- or tri-hydroxy-lower alkylamine, e.g. mono-, di- or triethanolamine. In addition, corresponding internal salts may optionally be formed. In the context of the invention, preference is given to agrochemically advantageous salts. In view of the close relationship between the compounds (A) or the compounds (B) or compounds (C) in free form and in the form of their salts, hereinabove and herein below any reference to the free compounds (A) or free compounds (B) or free compounds (C) or to their salts should be understood as including also the corresponding salts or the free compounds (A) or free compounds (B) or free compounds (C), respectively, where appropriate and expedient. The equivalent also applies to tautomers of compounds (A) or compounds (B) or compounds (C) and to their salts.

According to the invention the expression "combination" stands for the various combinations of compounds (A) and (B) and/or (C), for example in a single "ready-mix" form, in a combined spray mixture composed from separate formulations of the single active compounds, such as a "tank-mix", and in a combined use of the single active ingredients when applied in a sequential manner, i.e. one after the other within a reasonably short period, such as a few hours or days. Preferably the order of applying the compounds (A) and (B) and/or (C) is not essential for working the present invention.

In a further aspect, there is provided a composition comprising a combination according to this invention. Preferably the fungicidal composition comprises an agriculturally acceptable support, carrier or filler.

According to the invention, the term "support" denotes a natural or synthetic, organic or inorganic compound with which the active compound (A) and/or (B) and/or (C) is combined or associated to make it easier to apply, notably to the parts of the plant. This support is thus generally inert and should be agriculturally acceptable. The support may be a solid or a liquid. Examples of suitable supports include clays, natural or synthetic silicates, silica, resins, waxes, solid fertilisers, water, alcohols, in particular butanol, organic solvents, mineral and plant oils and derivatives thereof.

Mixtures of such supports may also be used.

The composition according to the invention may also comprise additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the present compounds containing sulphate, sulphonate and phosphate functions. The presence of at least one surfactant is generally essential when the active compound and / or the inert support are water-insoluble and when the vector agent for the application is water. Preferably, surfactant content may be comprised from 5% to 40% by weight of the composition.

Colouring agents such as inorganic pigments, for example iron oxide, titanium oxide, ferro-cyanblue, and organic pigments such as alizarin, azo and metallophthalocyanine dyes, and trace elements such as iron, manganese, boron, copper, cobalt, molybdenum and zinc salts can be used.

Optionally, other additional components may also be included, e.g. protective colloids, adhesives, thickeners, thixotropic agents, penetration agents, stabilisers, sequestering agents. More generally, the active compounds can be combined with any solid or liquid additive, which complies with the usual formulation techniques.

In general, the composition according to the invention may contain from 0.05 to 99% by weight of active compounds, preferably from 10 to 70% by weight.

The combination or composition according to the invention can be used as such, in form of their formulations or as the use forms prepared therefrom, such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ULV) liquid, ultra low volume (ULV) suspension, water dispersible granules or tablets, water dispersible powder for slurry treatment, water soluble granules or tablets, water soluble powder for seed treatment and wettable powder.

The treatment of plants and plant parts with the active compound combination according to the invention is carried out directly or by action on their environment, habitat or storage area by means of the normal treatment methods, for example by watering (drenching), drip irrigation, spraying, atomizing, broadcasting, dusting, foaming, spreading-on, and as a powder for dry seed treatment, a solution for seed treatment, a water-soluble powder for seed treatment, a water-soluble powder for slurry treatment, or by encrusting.

These compositions include not only compositions which are ready to be applied to the plant or seed to be treated by means of a suitable device, such as a spraying or dusting device, but also concentrated commercial compositions which must be diluted before application to the crop.

The active compounds within the combinations/compositions according to the invention have potent microbicide activity and can be employed for controlling undesired micro-organisms, such as fungi or bacteria, in crop protection or in the protection of materials.

Within the combinations/compositions according to the invention, fungicide compounds can be employed in crop protection for example for controlling Plasmodiophoromycetes, Oomycetes, Chytridiomycetes, Zygomycetes, Ascomycetes, Basidiomycetes and Deuteromycetes.

Within the combinations/compositions according to the invention, bactericide compounds can be employed in crop protection for example for controlling Pseudomonadaceae, Rhizobiaceae, Enterobacteriaceae, Corynebacteriaceae and Streptomycetaceae.

The fungicide combinations/compositions according to the invention can be used to curatively or preventively control the phytopathogenic fungi of plants or crops. Thus, according to a further aspect of the invention, there is provided a method for curatively or preventively controlling the phytopathogenic fungi of plants or crops comprising the use of a fungicide combination/composition according to the invention by application to the seed, the plant or to the fruit of the plant or to the soil in which the plant is growing or in which it is desired to grow.

The composition of the invention is also suitable for the treatment of seeds. A large part of the damage caused by pests on cultigens occurs by infestation of the seed during storage and after sowing the seed in the ground as well as during and after germination of the plants. This phase is especially critical since the roots and shoots of the growing plant are particularly sensitive and even a small amount of damage can lead to withering of the whole plant.

The method of treatment according to the invention may also be useful to treat propagation material such as tubers or rhizomes, but also seeds, seedlings or seedlings pricking out and plants or plants pricking out. This method of treatment can also be useful to treat roots. The method of treatment according to the invention can also be useful to treat the over-ground parts of the plant such as trunks, stems or stalks, leaves, flowers and fruit of the concerned plant.

Among the plants that can be protected by the method according to the invention, mention may be made of cotton; flax ; vine; fruit or vegetable crops such as *Rosaceae sp.* (for instance pip fruit such as apples and pears, but also stone fruit such as apricots, almonds and peaches), *Ribesioidae sp., Jug-landaceae sp., Betulaceae sp., Anacardiaceae sp., Fagaceae sp., Moraceae sp., Oleaceae sp., Acti-nidaceae sp., Lauraceae sp., Musaceae sp.* (for instance banana trees and plantins), *Rubiaceae sp., Theaceae sp., Steruliceae sp., Rutaceae sp.* (for instance lemons, oranges and grapefruit) ; *Solana-ceae sp.* (for instance tomatoes), *Liliaceae sp., Asteraceae sp.* (for instance lettuces), *Umbelliferae sp., Cruciferae sp., Chenopodiaceae sp., Cucurbitacene sp., Papilionaceae sp.* (for instance peas), *Rosaceae sp.* (for instance strawberries) ; major crops such as *Graminae sp.* (for instance maize, lawn or cereals such as wheat, rye, rice, barley and triticale), *Asteraceae sp.* (for instance sunflower), *Cruciferae sp.* (for instance colza), *Fabacae sp.* (for instance peanuts), *Papilionaceae sp.* (for instance soybean), *Solanaceae sp.* (for instance potatoes), *Chenopodiaceae sp.* (for instance beetroots) ; horticultural and forest crops ; as well as genetically modified homologues of these crops.

The method of treatment according to the invention can be used in the treatment of genetically modified organisms, e.g. plants or seeds. Genetically modified plants are plants of which a heterologous gene encoding a protein of interest has been stably integrated into genome. The expression "heterologous gene encoding a protein of interest" essentially means genes which give the transformed plant new agronomic properties, or genes for improving the agronomic quality of the modified plant.

A further aspect of the instant invention is a method of protecting natural substances of vegetable or animal origin or their processed forms, which have been taken from the natural life cycle, which comprises applying to said natural substances of vegetable or animal origin or their processed forms a combination of compounds (A) and (B) and optionally (C) in a synergistically effective amount.

A preferred embodiment is a method of protecting natural substances of vegetable origin or their processed forms, which have been taken from the natural life cycle, which comprises applying to said natural substances of vegetable origin or their processed forms a combination of compounds (A) and (B) and optionally (C) in a synergistically effective amount.

A further preferred embodiment is a method of protecting fruit, preferably pomes, stone fruits, soft fruits and citrus fruits, or their processed forms, which have been taken from the natural life cycle, which comprises applying to said natural substances of vegetable origin or their processed forms a combination of compounds (A) and (B) and optionally (C) in a synergistically effective amount.

The combinations/compositions of the present invention may also be used in the field of protecting technical material against attack of fungi. According to the instant invention, the term "technical material" includes paper; carpets; constructions; cooling and heating systems; wall-boards; ventilation and air conditioning systems and the like. The combinations according the present invention can prevent disadvantageous effects such as decay, discoloration or mold. Preferably "technical material" is understood to denote wall-boards.

The method of treatment according to the invention can also be used in the field of protecting storage goods against attack of fungi. According to the instant invention, the term "storage goods" is understood to denote natural substances of vegetable or animal origin and their processed forms, which have been taken from the natural life cycle and for which long-term protection is desired. Storage goods of vegetable origin, such as plants or parts thereof, for example stalks, leafs, tubers, seeds, fruits or grains, can be protected in the freshly harvested state or in processed form, such as pre-dried, moistened, comminuted, ground, pressed or roasted. Also falling under the definition of storage goods is timber, whether in the form of crude timber, such as construction timber, electricity pylons and barriers, or in the form of finished articles, such as furniture or objects made from wood. Storage goods of animal origin are hides, leather, furs, hairs and the like. The combinations/compositions according to the present invention can prevent disadvantageous effects such as decay, discoloration or mold. Preferably "storage goods" is understood to denote natural substances of vegetable origin and their processed forms, more preferably fruits and their processed forms, such as pomes, stone fruits, soft fruits and citrus fruits and their processed forms.

In another preferred embodiment of the invention "storage goods" is understood to denote wood. The fungicide combination or composition according to the invention may also be used against fungal diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting a combination/composition according to the invention; this includes for example direct application, spraying, dipping, injection or any other suitable means.

Among the diseases of plants or crops that can be controlled by the method according to the invention, mention may be made of:

Powdery Mildew Diseases such as
Blumeria diseases caused for example by Blumeria graminis
Podosphaera diseases caused for example by Podosphaera leucotricha

Sphaerotheca diseases caused for example by Sphaerotheca fuliginea
Uncinula diseases caused for example by Uncinula necator
Rust Diseases such as
Gymnosporangium diseases caused for example by Gymnosporangium sabinae
Hemileia diseases caused for example by Hemileia vastatrix
Phakopsora diseases caused for example by Phakopsora pachyrhizi and Phakopsora meibomiae
Puccinia diseases caused for example by Puccinia recondite, and Puccinia triticina;
Uromyces diseases caused for example by Uromyces appendiculatus
Oomycete Diseases such as
Bremia diseases caused for example by Bremia lactucae
Peronospora diseases caused for example by Peronospora pisi and Peronospora brassicae
Phytophthora diseases caused for example by Phytophthora infestans
Plasmopara diseases caused for example by Plasmopara viticola
Pseudoperonospora diseases caused for example by Pseudoperonospora humuli and Pseudoperonospora cubensis.
Pythium diseases caused for example by Pythium ultimum
Leafspot, Leaf blotch and Leaf Blight Diseases such as
Alternaria diseases caused for example by Alternaria solani
Cercospora diseases caused for example by Cercospora beticola
Cladiosporium diseases caused for example by Cladiosporium cucumerinum
Cochliobolus diseases caused for example by Cochliobolus sativus
(Conidiaform: Drechslera, Syn: Helminthosporium);
Colletotrichum diseases caused for example by Colletotrichum lindemuthianum
Cycloconium diseases caused for example by Cycloconium oleaginum
Diaporthe diseases caused for example by Diaporthe citri
Elsinoe diseases caused for example by Elsinoe fawcettii
Gloeosporium diseases caused for example by Gloeosporium laeticolor
Glomerella diseases caused for example by Glomerella cingulata
Guignardia diseases caused for example by Guignardia bidwellii
Leptosphaeria diseases caused for example by Leptosphaeria maculans
Magnaporthe diseases caused for example by Magnaporthe grisea
Mycosphaerella diseases caused for example by Mycosphaerella graminicola and Mycosphaerella fijiensis
Phaeosphaeria diseases caused for example by Phaeosphaeria nodorum
Pyrenophora diseases caused for example by Pyrenophora teres
Ramularia diseases caused for example by Ramularia collo-cygni
Rhynchosporium diseases caused for example by Rhynchosporium secalis
Septoria diseases caused for example by Septoria apii;
Typhula diseases caused for example by Thyphula incamata
Venturia diseases caused for example by Venturia inaequalis
Root- and Stem Diseases such as
Corticium diseases caused for example by Corticium graminearum
Fusarium diseases caused for example by Fusarium oxysporum
Gaeumannomyces diseases caused for example by Gaeumannomyces graminis
Rhizoctonia diseases caused for example by Rhizoctonia solani
Oculimacula (Tapesia) diseases caused for example by Oculimacula Tapesia acufonnis
Thielaviopsis diseases caused for example by Thielaviopsis basicola
Ear and Panicle Diseases including Maize cob such as
Alternaria diseases caused for example by Alternaria spp.
Aspergillus diseases caused for example by Aspergillus flavus
Cladosporium diseases caused for example by Cladiosporium cladosporioides
Claviceps diseases caused for example by Claviceps purpurea
Fusarium diseases caused for example by Fusarium culmorum
Gibberella diseases caused for example by Gibberella zeae
Monographella diseases caused for example by Monographella nivalis
Smut- and But Diseases such as
Sphacelotheca diseases caused for example by Sphacelotheca reiliana
Tilletia diseases caused for example by Tilletia caries
Urocystis diseases Urocystis occulta

Ustilago diseases caused for example by Ustilago nuda;
Fruit Rot and Mould Diseases such as
Aspergillus diseases caused for example by Aspergillus flavus
Botrytis diseases caused for example by Botrytis cinerea
Penicillium diseases caused for example by Penicillium expansum and Penicillium purpurogenum
Sclerotinia diseases caused for example by Sclerotinia sclerotiorum;
Verticillium diseases caused for example by Verticillimn alboatrum
Seed- and Soilborne Decay, Mould, Wilt, Rot and Damping-off diseases
Fusarium diseases caused for example by Fusarium culmorum
Phytophthora diseases caused for example by Phytophthora cactorum
Pythium diseases caused for example by Pythium ultimum
Rhizoctonia diseases caused for example by Rhizoctonia solani
Sclerotium diseases caused for example by Sclerotium rolfsii
Canker, Broom and Dieback Diseases such as
Nectria diseases caused for example by Nectria galligena
Blight Diseases such as
Monilinia diseases caused for example by Monilinia laxa a
Leaf Blister or Leaf Curl Diseases including deformation of blooms and fruits such as
Taphrina diseases caused for example by Taphrina deformans
Decline Diseases of Wooden Plants such as
Esca disease caused for example by Phaeomoniella clamydospora and Phaeoacremonium aleo-philum and Fomitiporia mediterranea
Diseases of Flowers and Seeds such as
Botrytis diseases caused for example by Botrytis cinerea
Diseases of Tubers such as
Rhizoctonia diseases caused for example by Rhizoctonia solani
Helminthosporium diseases caused for example by Helminthosporium solani
Diseases caused by Bacterial Organisms such as
Xanthomanas species for example Xanthomonas campestris pv. Oryzae
Pseudomonas species for example Pseudomonas syringae pv. Lachrymaus
Erwinia species for example Erwinia amylovora.

The combinations/compositions related to this invention are preferably used to control the following soybean diseases:

Fungal Diseases of the Foliage, Upper Stems, Pods and Seeds for example

Alternaria leaf spot (Altemaria spec. atrans tenuissima), Anthracnose (Colletotrichum gloeo-sporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptospllaerulina Leaf Spot (Leptosphaerulina trifolii), Phyllostica Leaf Spot (Phyllosticta so-jaecola), Pod and Stem Blight (Phomopsis sojae), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi, Phakopsora meibomiae), Scab (Sphaceloma glycines), Stemphylium Leaf Blight (Stemphylium botryosum), Target Spot (Corynespora cas-siicola)

Fungal Disease of the Roots and Lower Stems for example

Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus ter-restris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

The method of treatment according to the invention also provides the use or application of compounds (A) and (B) and optionally (C) in a simultaneous, separate or sequential manner. If the single active ingredients are applied in

a sequential manner, i.e. at different times, they are applied one after the other within a reasonably short period, such as a few hours or days. Preferably the order of applying the compounds (A) and (B) and optionally (C) is not essential for working the present invention.

The dose of active compound usually applied in the method of treatment according to the invention is generally and advantageously

- for foliar treatments: from 0.1 to 10,000 g/ha, preferably from 10 to 1,000 g/ha, more preferably from 30 to 300g/ha; in case of drench or drip application, the dose can even be reduced, especially while using inert substrates like rockwool or perlite;
- for seed treatment: from 2 to 200 g per 100 kilogram of seed, preferably from 3 to 150 g per 100 kilogram of seed;
- for soil treatment: from 0.1 to 10,000 g/ha, preferably from 1 to 5,000 g/ha.

The doses herein indicated are given as illustrative examples of the method according to the invention. A person skilled in the art will know how to adapt the application doses, notably according to the nature of the plant or crop to be treated.

The compounds or mixtures according to the invention may also be used for the preparation of composition useful to curatively or preventively treat human or animal fungal diseases such as, for example, mycoses, dennatoses, trichophyton diseases and candidiases or diseases caused by *Aspergillus spp.,* for example *Aspergillus fumigatus.*

*Mycotoxins*

Furthermore combinations/compositions according to the invention may also be used to reduce the contents of mycotoxins in the harvested crops and therefore in foods and animal feed stuff made therefrom.

Especially but not exclusively the following mycotoxins can be specified:

Deoxynivalenole (DON), Nivalenole, 15-Ac-DON, 3-Ac-DON, T2- und HT2- Toxins, Fumonisines, Zearalenone Monilifonnine, Fusarine, Diaceotoxyscirpenole (DAS), Beauvericine, Enniatine, Fusaroproliferine, Fusarenole, Ochratoxines, Patuline, Ergotalcaloides und Aflatoxines, which are caused for example by the following fungal diseases: Fusarium spec., like Fusarium acuminatum, F. avenaceum, F. crookwellense, F. culmorum, F. graminearum (Gibberella zeae), F. equiseti, F. fuji-koroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides and others but also by Aspergillus spec., Penicillium spec., Claviceps purpurea, Stachybotrys spec. and others.

*Treatment of seeds*

The invention comprises a procedure in which the seed is treated at the same time with a compound (A) and a compound (B) and optionally a compound (C). It further comprises a method in which the seed is treated with compound (A) and compound (B) and optionally compound (C) sequentially or separately, i.e. at different times. If the single active ingredients are applied in a sequential / separate manner, i.e. at different times, they are applied one after the other within a reasonably short period, such as a few hours or days. Preferably the order of applying the compounds (A) and (B) and optionally (C) is not essential for working the present invention.

The invention also comprises a seed, which has been treated with compound (A) and compound (B) and optionally compound (C) at the same time. The invention also comprises a seed, which has been treated with compound (A) and compound (B) and optionally compound (C) sequentially or separately, i.e. at different times. For the seed treated with compound (A) and compound (B) and optionally compound (C) sequentially or separately, the active ingredients can be applied in separate layers. These layers can optionally be separated by an additional layer that may or may not contain an active ingredient. According to a preferred embodiment of the present invention, seed which has been treated with compound (A) and compound (B) and optionally compound (C) at the same time or at different times refers to seed that still comprises an amount of compound (A) and compound (B) and optionally compound (C).

The combinations/compositions of the invention are particularly suitable for the treatment of seeds. A large part of the damage caused by pests on cultigens occurs by infestation of the seed during storage and after sowing the seed in the ground as well as during and after germination of the plants. This phase is especially critical since the roots and shoots of the growing plant are particularly sensitive and even a small amount of damage can lead to withering of the whole plant. There is therefore considerable interest in protecting the seed and the germinating plant by the use of suitable agents.

The control of pests by treatment of the seeds of plants has been known for a considerable time and is the object of continuous improvement. However, there are a number of problems in the treatment of seed that cannot always be satisfactorily solved. Therefore it is worthwhile to develop methods for the protection of seeds and germinating plants which makes the additional application of plant protection agents after seeding or after germination of the plants superfluous. It is further worthwhile to optimize the amount of the applied active material such that the seed and the germinating plants are protected against infestation by pests as best as possible without the plants themselves being damaged by the active compound applied. In particular, methods for the treatment of seed should also take into account the intrinsic insecticidal properties of transgenic plants in order to achieve optimal protection of the seed and germinating plants with a minimal expenditure of plant protection agents.

The present invention relates therefore especially to a method for the protection of seed and germinating plants from infestation with pests in that the seed is treated with the combination/composition of the invention. In addition the invention relates also to the use of the combination/composition of the invention for the treatment of seed for protection of the seed and the germinating plants from pests. Furthermore the invention relates to seed which was treated with an combination/ composition of the invention for protection from pests.

One of the advantages of the invention is because of the special systemic properties of the combination/ composition of the invention treatment with these combination/ composition protects not only the seed itself from pests but also the plants emerging after sprouting. In this way the direct treatment of the culture at the time of sowing or shortly thereafter can be omitted.

A further advantage is the synergistic increase in fungicidal activity of the combination/ composition of the invention in comparison to the respective individual active compounds, which extends beyond the sum of the activity of both individually applied active compounds. In this way an optimization of the amount of active compound applied is made possible.

It is also be regarded as advantageous that the combinations/compositions of the invention can also be used in particular with transgenic seeds whereby the plants emerging from this seed are capable of the expression of a protein directed against pests. By treatment of such seed with the agents of the invention certain pests can already be controlled by expression of the, for example, insecticidal protein, and it is additionally surprising that a synergistic activity supplementation occurs with the agents of the invention, which improves still further the effectiveness of the protection from pest infestation.

The combinations/compositions of the invention are suitable for the protection of seed of plant varieties of all types as already described which are used in agriculture, in greenhouses, in forestry, in garden construction or in vineyards. In particular, this concerns seed of maize, peanut, canola, rape, poppy, olive, coconut, cacao, soy, cotton, beet, (e.g. sugar beet and feed beet), rice, millet, wheat, barley, oats, rye, sunflower, sugar cane or tobacco. The combinations/compositions of the invention are also suitable for the treatment of the seed of fruit plants and vegetables as previously described. Particular importance is attached to the treatment of the seed of maize, soy, cotton, wheat and canola or rape.

As already described, the treatment of transgenic seed with a combination/composition of the invention is of particular importance. This concerns the seeds of plants which generally contain at least one heterologous gene that controls the expression of a polypeptide with special insecticidal properties. The heterologous gene in transgenic seed can originate from microorganisms such as Bacillus, Rhizobium, Pseudomonas, Serratia, Trichodenna, Clavibacter, Glomus or Gliocladium. The present invention is particularly suitable for the treatment of transgenic seed that contains at least one heterologous gene that originates from Bacillus sp. and whose gene product exhibits activity against the European corn borer and/or western corn rootworm. Particularly preferred is a heterologous gene that originates from Bacillus thuringiensis.

Within the context of the present invention the combination/composition of the invention is applied to the seed alone or in a suitable formulation. Preferably the seed is handled in a state in which it is so stable, that no damage occurs during treatment. In general, treatment of the seed can be carried out at any time between harvest and sowing. Normally seed is used that was separated from the plant and has been freed of spadix, husks, stalks, pods, wool or fruit flesh. Use of seed that was harvested, purified, and dried to moisture content of below 15 % w/w. Al-ternatively, seed treated with water after drying and then dried again can also be used.

In general, care must be taken during the treatment of the seed that the amount of the combination/composition of the invention and/or further additive applied to the seed is so chosen that the germination of the seed is not impaired and the emerging plant is not damaged. This is to be noted above all with active compounds which can show phytotoxic effects when applied in certain amounts.

The combination/compositions of the invention can be applied directly, that is without containing additional components and without being diluted. It is normally preferred to apply the combination/ composition to the seed in the form of a suitable formulation. Suitable formulations and methods for seed treatment are known to the person skilled in the art and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

According to another aspect of the present invention, in the combination or composition according to the invention, the compound ratio A/B, A/C or A/B/C may be advantageously chosen so as to produce a synergistic effect. A synergistic effect of fungicides is always present when the fungicidal activity of the active compound combinations exceeds the total of the activities of the active compounds when applied individually. The expected activity for a given combination of two or three active compounds can be calculated as follows (cf. Colby, S.R., "Calculating Synergistic and Antagonistic Responses of Herbicide Combinations", Weeds 1967, 15, 20-22).

The latter article mentions the formula for combinations of 2 active compounds:

$$E_1 = X + Y - \frac{X \cdot Y}{100}$$

and the formula for a combination of 3 active compounds:

$$E2 = X + Y + Z - \frac{(X \cdot Y + X \cdot Z + Y \cdot Z)}{100} + \frac{X \cdot Y \cdot Z}{10000}$$

wherein

X denotes the efficacy when using active compound A at an application rate of m ppm (or g/ha),
Y denotes the efficacy when using active compound B (or C) at an application rate of n ppm (or g/ha),
Z denotes the efficacy when using active compound C at an application rate of r ppm (or g/ha),
$E_1$ denotes the efficacy when using active compounds A and B at application rates of m and n ppm (or g/ha), and
$E_2$ denotes the efficacy when using active compounds A and B and C at application rates of m and n and r ppm (or g/ha),

The term "synergistic effect" also means the effect defined by application of the Tammes method, "Isoboles, a graphic representation of synergism in pesticides", Netherlands Journal of Plant Pathology, 70(1964), pages 73-80.

Here, the efficacy is determined in %. 0 % means an efficacy which corresponds to that of the control, whereas an efficacy of 100 % means that no infection is observed.

If the actual fungicidal action exceeds the calculated value, the action of the combination is superadditive, i.e. a synergistic effect is present. In this case, the actually observed efficacy must exceed the value calculated using the above formula for the expected efficacy ($E_1$ or $E_2$).

The invention is illustrated by the examples below. However, the invention is not limited to the examples.

Example A

***Puccinia triticina-test* (wheat) / preventive**

| | |
|---|---|
| Solvent: | 49 parts by weight of n,n-dimethylacetamid |
| Emulsifier: | 1 part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has been dried, the plants are sprayed with a spore suspension of ***Puccinia triticina.*** The plants remain for 48 hours in an incubation cabinet at approximately 20°C and a relative atmospheric humidity of approximately 100%.

The plants are placed in the greenhouse at a temperature of approximately 20°C and a relative atmospheric humidity of approximately 80%.

The test is evaluated 8 days after the inoculation. 0% means an efficacy which corresponds to that of the control, while an efficacy of 100% means that no disease is observed.

The table below clearly shows that the observed activity of the active compound combination according to the invention is greater than the calculated activity, i.e. a synergistic effect is present.

Table A

| *Puccinia triticina-test* (wheat) / preventive | | | | | |
|---|---|---|---|---|---|
| Active compounds | Ratio of mixture | | Application rate of active compound in g/ha | Efficacy in % | |
| | | | | found* | calc.** |
| Ex. I Bixafen 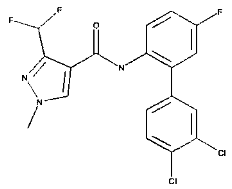 | | | 125 | 78 | |
| Ex. II Proquinazid 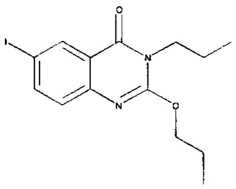 | | | 62,5 | 0 | |
| Bixafen + Proquinazid | } | 2 : 1 | 125 + 62,5 | 89 | 78 |
| * found = activity found<br>** calc. = activity calculated using Colby's formula | | | | | |

Example B

*Septoria-tritici-test* (wheat) / preventive

| | |
|---|---|
| Solvent: | 49 parts by weight of n,n-dimethylacetamid |
| Emulsifier: | 1 part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has dried on, the plants are sprayed with a spore suspension of *Septoria tritici.* The plants remain for 48 hours in an incubation cabinet at approximately 20°C and a relative atmospheric humidity of approximately 100% and then 60 hours at approximately 15°C in a translucent incubation cabinet at a relative atmospheric humidity of approximately 100%.

The plants are placed in a greenhouse at a temperature of approximately 15°C and a relative atmospheric humidity of approximately 80%.

The test is evaluated 21 days after the inoculation. 0% means an efficacy which corresponds to that of the control, while an efficacy of 100% means that no disease is observed.

The table below clearly shows that the observed activity of the active compound combination according to the invention is greater than the calculated activity, i.e. a synergistic effect is present.

Table B

| *Septoria tritici-test* (wheat) / preventive | | | | | |
|---|---|---|---|---|---|
| Active compounds | Ratio of mixture | | Application rate of active compound in g/ha | Efficacy in % found* | calc.** |
| Ex. I Bixafen 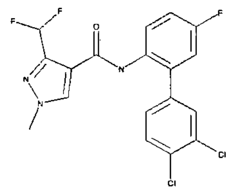 | | | 125 | 56 | |
| Ex.II Proquinazid 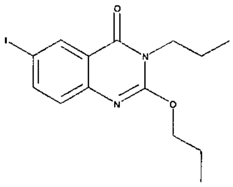 | | | 62,5 | 22 | |
| Bixafen + Proquinazid | } | 2:1 1 | 125 + 62,5 | 89 | 66 |
| * found = activity found<br>** calc. = activity calculated using Colby's fonnula | | | | | |

Example C

*Pyrenophora teres*-test (barley) / preventive

| | |
|---|---|
| Solvent: | 49 parts by weight of n,n-dimethylacetamid |
| Emulsifier: | 1 part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has been dried, the plants are sprayed with a spore suspension of Pyrenophora teres. The plants remain for 48 hours in an incubation cabinet at approximately 20°C and a relative atmospheric humidity of approximately 100%.

The plants are placed in the greenhouse at a temperature of approximately 20°C and a relative atmospheric humidity of approximately 80%.

The test is evaluated 8 days after the inoculation. 0% means an efficacy which corresponds to that of the untreated control, while an efficacy of 100% means that no disease is observed.

Table C-1

| *Pyrenophora teres*-test (barley) / preventive | | | |
|---|---|---|---|
| Active compounds | Application rate of active compound in ppm | Efficacy in % found* | calc.** |
| (I) Bixafen | 50 | 88 | |
| (II) Prothioconazole | 50 | 38 | |

(continued)

| *Pyrenophora teres*-test (barley) / preventive | | | |
|---|---|---|---|
| Active compounds | Application rate of active compound in ppm | Efficacy in % | |
| | | found* | calc.** |
| (III) Proquinazid | 50 | 38 | |
| (I) + (II) 1 : 1 | 50 + 50 | 94 | 93 |
| (I) + (III) 1 : 1 | 50 + 50 | 94 | 93 |
| (II) + (III) 1 : 1 | 50 + 50 | 63 | 62 |
| (I) + (II) + (III) 1 : 1 : 1 | 50 + 50 + 50 | 100 | 95 |
| * found = activity found<br>** calc. = activity calculated using Colby's formula | | | |

Table C-2

| Active compounds | Application rate of active compound in ppm | Efficacy in % | |
|---|---|---|---|
| | | found* | calc.** |
| (I) Bixafen | 50 | 88 | |
| (II) Prothioconazole | 25 | 38 | |
| (III) Proquinazid | 100 | 38 | |
| (I) + (II) 2 : 1 | 50 + 25 | 94 | 93 |
| (I) + (III) 1 : 2 | 50 + 100 | 94 | 93 |
| (II) + (III) 1 : 4 | 25 + 100 | 75 | 62 |
| (I) + (II) + (III) 2 : 1 : 4 | 50 + 25 + 100 | 100 | 95 |
| * found = activity found<br>** calc. = activity calculated using Colby's formula | | | |

## Claims

1. Fungicidally active compound combination comprising

   (A) proquinazid
   and
   (B) bixafen.

2. Combination according to claim 1 comprising additionally as further compound

   (C) prothioconazole,

3. Combination according to claim 1 or 2 comprising compounds (A):(B) and (A):(C) and (B):(C) in a respective weight ratio of 1:100 to 100:1.

4. A composition comprising a combination according to claims 1 to 3, further comprising adjuvants, solvents, carrier, surfactants or extenders.

5. A method for curatively or preventively controlling the phytopathogenic fungi of plants or crops comprising the use of a fungicidally active compound combination according to claims 1 - to 3 by application to the seed, the plant or to the fruit of the plant or to the soil in which the plant is growing or in which it is desired to grow.

6. The method according to claim 5 **characterized in that** the mixing partners (A) and (B) or (A) and (B) and (C) are applied simultaneously.

7. The method according to claim 5 **characterized in that** the mixing partners (A) and (B) or (A) and (B) and (C) are applied sequentially.

8. The method according to any of claims 5 to 7 wherein the amount of the combination of claims 1 to 3 is from 0.1 g/ha to 10 kg/ha for foliar and soil treatment and from 2 to 200g/100 kg of seed for seed treatment.

9. Use of an active compound combination according to any of claims 1 to 3 for the treatment of seed.

10. Use according to claim 9 for the treatment of transgenic seed.

11. Method for protecting a seed and/or shoots and foliage of a plant grown from the seed from damage by a pest or a fungus, the method comprising treating an unsown seed with a combination according to any of claims 1 to 3.

12. Method according to claim 11, wherein the seed is treated with component (A) at the same time that it is treated with component(s) (B) or (B) and (C).

13. Method according to claim 12, wherein the seed is treated with component (A) at a different time than it is treated with component(s) (B) or (B) and (C).

14. Seed that has been treated with an active compound combination according to any of claims 1 to 3, wherein said seed still comprises an amount of compound (A) and compound (B) or and amount of compound (A) and compound (B) and compound (C).

**Patentansprüche**

1. Fungizide Wirkstoffkombination, die Folgendes umfasst:

   (A) Proquinazid
   und
   (B) Bixafen,

2. Kombination nach Anspruch 1, die zusätzlich als weitere Verbindung

   (C) Prothioconazole umfasst.

3. Kombination nach Anspruch 1 oder 2, die die Verbindungen (A) : (B) und (A) : (C) und (B):(C) in einem jeweiligen Gewichtsverhältnis von 1:100 bis 100:1 umfasst.

4. Zusammensetzung, die eine Kombination nach den Ansprüchen 1 bis 3 umfasst und die weiterhin Hilfsmittel, Lösungsmittel, Träger, Tenside oder Streckmittel umfasst.

5. Verfahren für die kurative oder präventive Bekämpfung von phytopathogenen Pilzen an Pflanzen oder Kulturen, umfassen die Verwendung einer fungiziden Wirkstoffkombination nach den Ansprüchen 1 bis 3 durch Applizieren auf das Saatgut, die Pflanze oder die Frucht der Pflanze oder auf den Boden, in dem die Pflanze wächst oder wachsen soll.

6. Verfahren nach Anspruch 5, **dadurch gekennzeichnet, dass** die Mischpartner (A) und (B) oder (A) und (B) und (C) gleichzeitig appliziert werden.

7. Verfahren nach Anspruch 5, **dadurch gekennzeichnet, dass** die Mischpartner (A) und (B) oder (A) und (B) und (C) nacheinander appliziert werden.

8. Verfahren nach einem der Ansprüche 5 bis 7, wobei die Menge der Verbindung nach den Ansprüchen 1 bis 3 0,1 g/ha bis 10 kg/ha für die Blatt- und Bodenbehandlung und 2 bis 200 g/100 kg Saatgut für die Saatgutbehandlung

beträgt.

**9.** Verwendung einer Wirkstoffkombination nach einem der Ansprüche 1 bis 3 für die Saatgutbehandlung.

**10.** Verwendung nach Anspruch 9 für die Behandlung von transgenem Saatgut.

**11.** Verfahren zum Schützen eines Saatguts und/oder von Sprossen und Blattwerk einer Pflanze, die aus dem Saatgut herangezogen wird, gegen Schädigung durch einen Schädling oder einen Pilz, wobei das Verfahren umfasst, dass man ein nicht ausgesätes Saatgut mit einer Kombination nach einem der Ansprüche 1 bis 3 behandelt.

**12.** Verfahren nach Anspruch 11, wobei das Saatgut mit Komponente (A) zu demselben Zeitpunkt behandelt wird, zu dem es mit Komponente(n) (B) oder (B) und (C) behandelt wird.

**13.** Verfahren nach Anspruch 12, wobei das Saatgut mit Komponente (A) zu einem unterschiedlichen Zeitpunkt behandelt wird, als es mit Komponente(n) (B) oder (B) und (C) behandelt wird.

**14.** Saatgut, das mit einer wirkstoffkombination nach einem der Ansprüche 1 bis 3 behandelt worden ist, wobei das Saatgut noch eine Menge an Verbindung (A) und Verbindung (B) oder eine Menge an Verbindung (A) und Verbindung (B) und Verbindung (C) umfasst.

## Revendications

**1.** Combinaison de composés actifs sur le plan fongicide, comprenant

(A) du proquinazid
et
(B) du bixafène.

**2.** Combinaison selon la revendication 1, comprenant en outre comme composé supplémentaire (C) du prothioconazole.

**3.** Combinaison selon la revendication 1 ou 2, comprenant les composés (A):(B) et (A) : (C) et (B) : (C) selon un rapport pondéral respectif allant de 1:100 à 100:1.

**4.** Composition comprenant une combinaison selon les revendications 1 à 3, comprenant en outre des adjuvants, des solvants, un véhicule, des agents tensioactifs ou des charges.

**5.** Méthode destinée au contrôle, de manière curative ou préventive, des champignons phytopathogènes de plantes ou de cultures, comprenant l'utilisation d'une combinaison de composés actifs sur le plan fongicide selon les revendications 1 à 3 par application aux semences, à la plante ou aux fruits de la plante ou au sol dans laquelle la plante se développe ou dans lequel on souhaite qu'elle se développe.

**6.** Méthode selon la revendication 5, **caractérisée en ce que** les partenaires de mélange (A) et (B) ou (A) et (B) et (C) sont appliqués simultanément.

**7.** Méthode selon la revendication 5, **caractérisée en ce que** les partenaires de mélange (A) et (B) ou (A) et (B) et (C) sont appliqués séquentiellement.

**8.** Méthode selon l'une quelconque des revendications 5 à 7, **caractérisée en ce que** la quantité de la combinaison selon les revendications 1 à 3 va de 0,1 g/ha à 10 kg/ha pour un traitement foliaire ou du sol et de 2 à 200 g/100 kg de semences pour un traitement des semences.

**9.** Utilisation d'une combinaison de composés actifs selon l'une quelconque des revendications 1 à 3, pour le traitement de semences.

**10.** Utilisation selon la revendication 9, pour le traitement de semences transgéniques.

**11.** Méthode de protection d'une semence et/ou de jeunes pousses et du feuillage d'une plante se développant à partir de la semence contre un endommagement par un nuisible ou un champignon, la méthode comprenant le traitement d'une semence non semée par une combinaison selon l'une quelconque des revendications 1 à 3.

**12.** Méthode selon la revendication 11, **caractérisée en ce que** la semence est traitée par le composant (A) en même temps qu'elle est traitée par le ou les composants (B) ou (B) et (C).

**13.** Méthode selon la revendication 12, **caractérisée en ce que** la semence est traitée par le composant (A) à un moment qui est différent de celui où elle est traitée par le ou les composants (B) ou (B) et (C).

**14.** Semence ayant été traitée par une combinaison de composés actifs selon l'une quelconque des revendications 1 à 3, **caractérisée en ce que** ladite semence comprend toujours une quantité de composé (A) et de composé (B) ou une quantité de composé (A) et de composé (B) et de composé (C).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9426722 A
- WO 03070705 A
- WO 9616048 A
- WO 2005034628 A
- WO 2007110173 A
- WO 9847367 A
- WO 03073850 A
- WO 03073851 A
- WO 03073852 A
- WO 9833381 A
- EP 2071953 A1
- US 4272417 A
- US 4245432 A
- US 4808430 A
- US 5876739 A
- US 20030176428 A1
- WO 2002080675 A1
- WO 2002028186 A2


### Non-patent literature cited in the description


- **COLBY, S.R.** Calculating Synergistic and Antagonistic Responses of Herbicide Combinations. *Weeds,* 1967, vol. 15, 20-22
- Isoboles, a graphic representation of synergism in pesticides. *Netherlands Journal of Plant Pathology,* 1964, vol. 70, 73-80